# EUROPEAN PATENT APPLICATION

(11) **EP 1 998 308 A1**
(43) Date of publication of application: **03.12.2008**
(21) Application number: 07010906.1
(22) Date of filing: 01.06.2007
(51) Int. Cl.: G09F 9/35, G09F 23/06, G09F 27/00

(54) **CyberMedia SMS advertisement display panel**

(71) Applicant: Homing, Tung, Sha Tin Hong Kong (CN)
(72) Inventor: Homing, Tung, Sha Tin Hong Kong (CN)
(74) Representative: Glawe, Delfs, Moll

(57) **Abstract**

The invention provides a kind of new-type digital short-message advertisement-broadcasting device, wherein it includes a digital short-message receiver, which is used to receive short-message via mobile communication network and send the said short-message to the central-control module, the said central-control module modifies the playing order in the program-list file of playing device according to the content of short message. Therefore, the manager of the playing device can transfer information in time to the said playing device in order to present to audience instantly and change content to be played. In addition, audience of playing device can also access this playing device instantly by using the short-message service of mobile communication in order to communicate interactively. The playing device can also be disposed at any place where is covered by the mobile communication network, without need of the cable connection or manual work on spot.

## Description

### Technique field

The invention is related to a kind of Digital Short-Message Advertisement-Broadcasting Device, which can be installed in bus, marketplace, and elevator, street and so on.

### Prior art

Currently, there are many LCD display devices, used to broadcast advertisement, installed in buildings, elevators and lifts on market. Broadcasting programs about fashion, shopping, food, sports, lifestyle, travel and so on provided by the world-class content providers makes trivial elevator waiting time a pleased and interesting experience. It also provides tenants of commercial buildings and marketplaces an opportunity to present information about their business to passengers passing by the advertisement-broadcasting device, attracting them to go to their stores.

The prior art control panel used in the advertisement-broadcasting LCD display device comprises only one MPEG file, which pre-records many advertisement materials. Some advertisement materials may comprise static rolling characters shown at the bottom of display. The said characters cannot be changed dynamically. The content of the said LCD display device can only be updated by workers on spot or CF card at the end of each week.

Most of display devices of the prior art technique comprise a digital storage device, which contains a MPEG file and can play this MPEG file via DVD decoder card or player. The said MPEG file is formed by combining several parts of advertisement recordings together. But, there are many limitations to such a system. The shortage of advertisement-broadcasting device of the prior art technique is:
(1) The prior art display device cannot provide such a kind of service when advertisement service providers want to broadcast message and need to provide an instant message (especially stock message) to LCD display device and present them to audience. I.e., it cannot provide an instant message display.
(2) The same user has different MPEG files needed to be displayed in different weeks or different days in a week in most of time. It is lack of agility since the prior art display device can only display one MPEG file in the same week.
(3) When a lot of LCD units are used on market, the control centre can not know in time the state of each unit and whether they are powered on or off. Therefore, the operation of LCD display device cannot be managed, monitored or controlled remotely.
(4) It cannot provide an interactive communication with audience.

On the other hand, the prior art mobile communication technique can also provide short-message transmission service and transmit text files or pictures, video and so on between mobile phones or between switchers, base stations and mobile phones, besides communication between mobile phones.

### Content of invention

The aim of invention is to combine the mobile communication technique and the digital display device together and control the digital display device remotely so as to transmit message instantly to the digital display device or change the playing order of episodes in the digital display device. So the digital display device can be placed in any place, without any geographical limitation, so as to overcome the shortage of the above said prior art display device.

The aim of invention is achieved by fully utilizing the prior art mobile communication network so as to attain maximum control and flexibility on the panel of LCD display device, which minimizes the utilization of human resource and cables.

The Digital Short-Message Advertisement-Broadcasting Device of invention can be divided into three modules: communication module, central-control module and multimedia module.

Communication module -the said communication module may be a GSM communication module, a 3G communication module or an IP video phone communication module, but mainly refers to a GSM communication module, which is in charge of receiving and transmitting SMS message. The communication module is used to take charge of receiving and transmitting the message of short-message service (SMS) wirelessly between the digital display device and the management centre, e.g. the said mobile communication module is a GSM communication module utilizing the technique of GSM (Global System for Mobile Communications) mobile communication.

Central-control module, which mainly refers to central-control unit (CCU), provides an interface between the above said mobile communication module and multimedia module. Its main function is to store, analyse and execute the short-message instruction. There are basically two kinds of instructions: action instruction and display instruction. The distinction between these two instructions is the message header. For the display instruction, CCU will store the remaining part of message header (tail of message) and display them on the rolling text. For the action instruction, CCU will do the corresponding action.

Multimedia module, which includes: a LCD display, a driver module of LCD display, a DVD decoder card, and a digital storage (e.g. hard disk or CF card). The DVD decoder card plays video episode according to the specific program-list file of storage device, the playing order of video episodes is programmed in the file. CCU can change the program-list file directly, so as to change the content of advertisement broadcasting. The said LCD display can also be replaced by a plasma display, a CRT display or any kind of appropriate display.

According to invention, the said central-control module can execute following operations:
1. Posting/Clearing messages transmitted via SMS on the LCD display panel.
2. Providing an interactive channel for audience to post his/her SMS message on the LCD display panel, so as to achieve the interactive function of advertisement.
3. The recorded MPEG file can be divided into several individual playing files, and stored in the same digital storage device. The playing file is extracted according to the program-list file and displayed on the LCD display panel. The said program-list file may be changed by the action instruction contained in SMS. As a result, the content displayed on the LCD display panel can be changed in time.
4. Sending a SMS action instruction can force the said digital short-message advertisement-broadcasting device to return the current state and details about power on/off and timer.
5. Even to control remotely to power on/off the said digital short-message advertisement-broadcasting device.
6. A sensor for number of viewer (eye ball) in front of the panel and store the data in the CCU, data will be sent out to the appointed location daily via SMS.

The invention is an extremely convenient and useful advertisement service providing device. The content to be displayed can be updated via CF card or hard disk and accessed according to the program-list file, without need of installing additional cables. The central-control centre can remotely control the LCD display panels at different locations, which makes it possible to deploy advertisement and display services in large scale, especially at some places where only one advertisement broadcasting display device is needed.

The invention is a kind of low-cost and effective scheme to control, monitor and manage the content of advertisement service. News, stock message, promotion message, public notification and so on can be presented to audience in time via the Digital Multi-Functional Advertisement-Broadcasting Device of invention. Content of advertisement can be remotely managed and changed, without need for any operator to go to the spot. The invention provides big flexibility of management. The invention can be used to deploy in large scale and lower cost effectively. The invention can remotely manage the digital short-message advertisement-broadcasting devices distributed everywhere.

The advantages of invention are:
(1) Programs can be changed optionally - many small MPEG files can be stored in the digital storage device, which are played by system according to the list of the said MPEG files (i.e. program-list file). The program-list file can be changed via SMS, so as to program the said MPEG files in a different order, or delete some MPEG files.
(2) Providing an instant message - news/stock messages can be transmitted to individual display device via SMS, and displayed in the rolling title at the bottom of LCD display panel.
(3) Synchronous playing - many digital short-message advertisement-broadcasting devices can be disposed in the same lobby, which can be played synchronously.
(4) Real-time management -state of each playing device can be queried by instruction.
5) Advertisement agent can provide the actual count of eye ball to advertisement daily to customer.

### Description of drawings

Figure 1 is the structural diagram of an embodiment of the digital short-message advertisement-broadcasting device of invention.
Figure 2 is the apparent diagram of an embodiment of the digital short-message advertisement-broadcasting device of invention.
Figure 3 is the schematic diagram explaining the theory of invention.
Figure 4 is the schematic diagram of GSM terminal, whose type is WAVECOM M1206B.
Figure 5 is the schematic diagram showing that the digital short-message advertisement-broadcasting device of invention contains a communication module, a central-control module and a multimedia module.

### Specific embodiments

The following is the interpretation of glossaries used in the description:
Display instruction - it is an instruction that instructs the display device to roll the text display.
Action instruction - it is an instruction that makes the display device power on/off;
Query instruction - it is an instruction that queries the state of the display device;
RGB mode - it is a kind of mode used in the electronic industry of video recording to decompose color into video component signal.

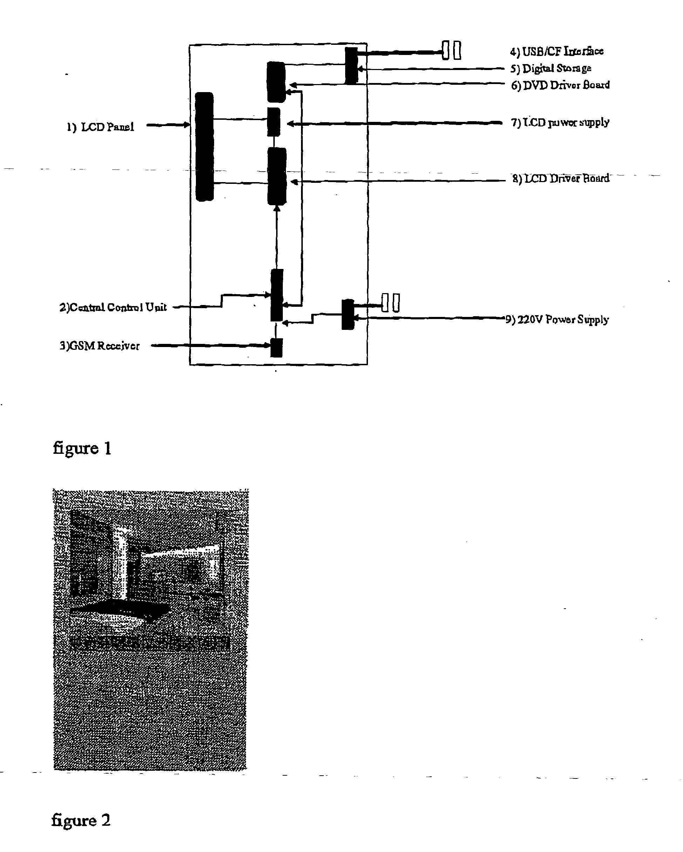

Figure 1 is the block diagram of embodiment of the digital short-message advertisement-broadcasting device of invention. As shown in diagram, it includes a display panel 1, a central-control module 2, a digital short-message receiver 3, a power supply 9, a display driver 8, a power supply of display 7, a DVD decoder/driver 6, a digital storage device 5, a input device 4, a synchronous module 10. The said input device 4 may be a USB interface, or a CF card, a SD card, a Flash card reader and so on. The said display panel 1 may be a LCD display, a plasma display, a CRT display or any other appropriate display.

The said digital short-message receiver 3, used to constitute the above said mobile communication module, may be a GSM receiver, a CDMA receiver, even a receiver using the mobile communication technique of personal handphone system. The said GSM receiver may be a receiver that utilizes the GSM mobile communication technique of 2G, 3G, or 4G and so on.

The said GSM receiver is inserted a SIM card. It is similar to a GSM mobile phone, which is used to receive and send SMS message. It enables the display device to communicate wirelessly with the central-management centre.

The provider of the digital short-message advertisement-broadcasting device of invention can control the power switch of the said display device, modify the program-list file stored in the said digital storage device 5, and send picture files, video files and so on to the said display device as a form of MPEG1/MPEG2/MPEG4 or JPG format files by sending short-message to the digital short-message advertisement-broadcasting device via the manage centre. Therefore, message can be sent to the digital short-message advertisement-broadcasting device in time according to invention, and the said digital short-message advertisement-broadcasting device can be installed at any location where can be covered by the mobile communication network, without any geographical limitation.

Audience standing in front of the individual digital short-message advertisement-broadcasting device, can also send a digital short-message to such a digital short-message advertisement-broadcasting device according to steps displayed on screen, so as to communicate interactively. For example, a port number (telephone number), e.g. 99003833, can be disclosed in the video program being played, the port number is registered in a telecom corporation (e.g. PCCW Limited), Audience can dial this number to send short-message, and the telecom corporation can charge service fee for each short-message (e.g. one yuan per short-message), which can be shared between the provider of advertisement-broadcasting device and the telecom corporation. Then the above said short-message is sent to a specific IP address corresponding to the advertisement-broadcasting device, the provider of advertisement-broadcasting device checks and processes the received short-message, finally short-message is displayed on display device.

The said central-control unit (CCU) is used as an interface between the GSM receiver and the DVD decoder. It analyses the incoming SMS instruction and makes a response. Validity and identity of sender can be verified, e.g. cipher code can be hidden in the first part of message header of each message just sent out. The type of instruction can be stored in the second part of message header. The remaining part of message is content. For example, the said SMS instruction can be the following formats.

| | | |
|---|---|---|
| 12345 | DSMS-ID time | 56 units have been sold, the rest of 160 units haven't |
| header | | tail |
| First part | Second part | |
| Cipher code | Indication used to display SMS, each message has an ID number, indication of display time can be also contained. | display content |

Messages with the same identity can be cascaded together or overwritten. CCU divides the RGB screen into two parts: the bottom part displaying the rolling text and the upper part of video display, as shown in figure 2. The rolling text is achieved in the form of matrix. The content is stored in chips.

Following is the embodiment for the action instruction.

| A, | | |
|---|---|---|
| | 12345 | LJGJ |

Power-off immediately, CCU will power off LCD panel and DVD decoder. But, CCU itself is in the state of standby, connected to the power supply, in order to power on according to the next instruction.

| B, | | |
|---|---|---|
| | 12345 | RQT |

This instruction queries CCU to provide current time of display device. CCU will have a cell to keep the timer working. The timer can also be changed via instruction contained in message.

| C, | | | |
|---|---|---|---|
| | 12345 | CSF | 1001,1004,1101 |

This instruction means to modify the program-list file (CSF), CCU will modify the program-list file stored in the digital storage device, change the playing order of MPEG files or delete some MPEG files from the program-list file. But, the content to be played can be stored in the digital storage device in advance. The central-control unit (CCU) has a build-in cell in order to store time information, CCU can also power on/off the player at pre-determined time automatically. This set-up can be achieved by remote control, for example: ON=9:00AM, OFF=10:00PM

The said synchronous unit 10 can be divided into a sub-unit and a parent-unit, the sub-unit is in charge of receiving time information, and the mother unit is in charge of sending time information out. The player with the sub-unit is called slaver, and the player with the mother unit is called master, both of them communicate directly with the central-control unit CCU, in order to synchronize time in the slaver and the master.

The multimedia unit described in above description of invention can includes following parts:

The digital storage device 5, which may be a hard disk. It stores MPEG1/MPEG2/MPEG4 or JPG files. It also includes a program-list file with specified file name, which may be a text file.

The input device 4, which may be a USB interface, a CF card reader, a SD card reader and so on. It can input all kinds of MPEG1/MPEG2/MPEG4 or JPG files to be played and a program-list file also. The file inputted from the input device 4 can be stored into the digital storage device 5.

The DVD decoder/driver 6, which has an IDE cable connecting to the said digital storage device and a signalling cable used to decode MPEG1/MPEG2/MPEG4 or JPG image files.

The display driver 8, which is used to drive the LCD display panel.

The display panel 1, which may be a RGB display or a video display. It may be a LCD display, a plasma display, a CRT display and so on.

According to invention, under the control of central-control unit, the DVD decoder/driver 6 read an image file out of the digital storage device and decode it, the decoded data is sent to the display driver 8, the display panel 1 displays the image file just read out under the control of display driver, broadcasts advertisement or other images and text information.

The digital short-message advertisement-broadcasting device of invention has the following functions:
1 Display the short-message in time.
2 Display the symbol picture.
3 Audience can send message to the player.
4 Power on/off the player by communication network; Control states of all players. All players can be controlled by the control center, for example: control all or a certain advertisement player to power on/off, set time to power on/off and whether or not to power on in holiday.
5 Pre-set time to power on /off the player automatically.
6 Set the power on mode of the player.
7 Check state information of all advertisement-broadcasting devices. Control center of all advertisement players can be setup in center so as to know states of all or a certain advertisement player in time, for example whether or not power on, program just played and so on.
8 Playing mode of player.
9 Modify the program-list of player.
10 Provide eye ball counter.

For example, LCD display used in invention may follow the following technique criterions:

### Item and count Description:

Control panel Digital short-message LCD display device with an of LCD display upgraded 40G hard disk.

| | |
|---|---|
| Size: Height: | 500 mm Width: 415 mm Thickness: 31 mm |
| Weight: | 6.6 kg |
| Power: | 60 W |
| LCD display type: | Active matrix TFT color screen |
| Best resolution: | 1280*1024 |
| Color depth: | 16.7M |
| Contrast: | 400:1 |
| Average brightness: | 250cd/m² |
| working environment temperature: | 0 - 45 |
| Power control: | VESA DPMS |
| Working state: | 70 W (max) |
| Standby state: | 8 W (max) |
| Output: | Alternating current 200V ± 10%, 50Hz |
| Input: | 1.9 Vrms |
| Frequency response: | (1.7 Hz - 20 Hz) ±0.5 dB |
| SNR (dB): | ≥ 95 |
| Distortion degree: | ≤ 0.01% |
| Dynamic range (dB) | ≥ 95 |
| Crosstalk(basic) (dB) | ≥ 85 |
| Output level Vpp: | 1.0 ±0.2 |
| Ratio of SNR to brightness: | ≥ 56 dB (excluding weight) |
| Ratio of SNR to color: | AM: 60 dB, PM ≥ 52 dB |
| Differential phrase (DP) : | ≤ 2 |
| Working life of tube: | 50,000 hour |
| Size (Length*Width*Thickne ss) : | 560mm*417mm*32.5mm |
| Net weight: | 6 kg |
| synchronous transmission distance: | ≤ 7 m |
| FCC rule: | CISPR 22 Class B Standards |

The mobile communication module in the digital short-message advertisement-broadcasting device of invention can also form a kind of open interface, for example the mobile communication module can be replaced by an IP videophone motherboard, Wireless communication board (WIFI, Wimax). This scheme is especially in favour of transmitting a MPEG short film from the service provider to the digital short-message advertisement-broadcasting device since the file transmitted via SMS or MMS service in the mobile communication technique is relative small. Of course, the IP videophone motherboard can also be connected to the management centre of the digital short-message advertisement-broadcasting device or service provider with the help of wireless network connection or cable. There is almost no limitation to the size and type of files to be transferred.

The said IP videophone motherboard (i.e. videophone motherboard, Vfone), for example, may comprise following technique criterions

| | |
|---|---|
| Support | ITU-T standard H.324 |
| | Signalling H.245 |
| | Channel multiplexing H.223 |
| Video | Supporting ITU-T standard H.263 |
| | CIF resolution 352x288 pixels |
| | Maximum frame rate 15fps |
| Audio | Supporting ITU-T standard G.723.1 |
| | Frequency response 50Hz~3.4KHz |
| | Full duplex |
| | Acoustic echo canceller |
| Camera | 1/4 inch CCD high-resolution color |
| | Illumination: 1.0 (20IRE), F2.0 |
| | Horizontal view angle: 50 degrees |
| | Vertical view angle: 39 degrees |
| Network | PSTN (Public Switch Telephone Network) |
| | RJ11 |
| | Transfer speed (max): 33.6Kbps(V.34) |
| | Communication mode: Synchronous access |
| Electrical | Operating voltage: 12V , 5VDC |
| | Power consumption: 13W (max) |
| | Input voltage: 100-240VAC compatible |

Therefore, following functions can be achieved according to invention
- Transfer the display instruction and information broadcast to the LCD display instantly via GSM SMS/Internet.
- Transfer the display instruction and symbol to the LCD display instantly via GSM SMS/Internet.
- Provide an interactive channel to audience who want their message to be displayed on the display device.
- Play various advertisement files stored in the same hard disk/CF card via a program-list file.
- The DVD decoder reads the program-list file and play correspondingly.
- The action instruction can modify/overwrite the program-list file via GSM SMS/Internet.
- Transfer the action instruction to make the display device return current state and details about power switch and timer.
- Transfer the action instruction to remotely power on/off the LCD display panel.

An alternative to the digital short-message advertisement-broadcasting device of invention is to achieve the above said functions by using an IP protocol based Vphone videophone or Video on Demand Set Top Box and a wired internet connection or wireless communication. It may also become a hotspot of Internet access.

Figure 2 illustrates the digital short-message advertisement-broadcasting device of invention being in the playing state, wherein the screen shows the room configuration and there is a title"50 units have been sold, the rest of 160 units haven't"at the bottom of screen. The internal structure of the display device is not shown in figure.

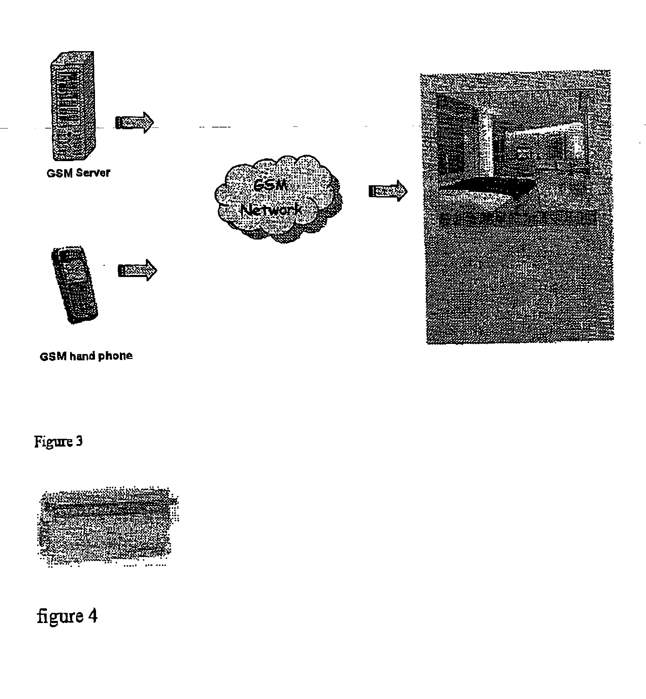

Figure 3 is the schematic diagram illustrating invention theory of the digital short-message advertisement-broadcasting device of invention. The diagram shows that the short-message can be sent out to the digital short-message advertisement-broadcasting device via the GSM mobile communication network by GSM server or GSM mobile phone. Therefore, according to invention, the short-message can be used to display information instantly, without need to use cable to connect each digital short-message advertisement-broadcasting device together.

Figure 4 is the schematic diagram of GSM short-message terminal, whose type is WAVECOM M1206B. It is also called short-message cat, which is a kind of GSM modem. The said GSM short-message terminal can be used as the digital short-message receiver of the digital short-message advertisement-broadcasting device of invention.

As an industry-level GSM terminal (touted as "text message cat"), WAVECOM 1206B has high reliability, it can send out about 800 pieces of text messages per hour and be more stable and convenient than the mobile phone does. And it supports all versions of software of short message device of invention.

This module can be used in houses monitoring and remote maintenance, local bank branches monitoring, GSM/SMS/GPS mobile vehicle monitoring and dispatch system, monitoring and dispatch of vehicles of police,110 and traffic police, monitoring and dispatch of mail cars, management and dispatch of taxi, dispatch of bus and indication, monitoring and dispatch of company vehicles, GSM/SMS mobile data inquiry system, inquiry of portable stock exchange information, inquiry of public security data (identification, criminal archive and so on), inquiry of traffic police data (vehicles and driver archives), moving office and management and all other field of applications.

### Product performance

Power supply: input voltage: 5V-32V, 5mA standby state
Product size: 98×54×25m
Product weight: 130 g
Supporting EGSM900/GSM1800 dual-frequency
Voice function: call out (GSM state), emergency call, speech encoding/decoding, double tone modulation function (DTMF)
echo cancellation and noise damping (optional)
function of data faxing: asynchronous data circuit, maximum transparent and non-transparent data rate 14,400 bits/s
The third class automatic fax machine (class1 and class 2) MNP2 V.42bis
Function of short message service: text and PDU, point to point (MT/MO), cell broadcast.
GSM Supplementary Services: call transfer, call barring, conference call, call waiting, call hold, caller ID, advice of charge, unstructured supplementary service data, closed user group, call transfer display interface
Accessories: user manual, power supply wire.
RS-232 serial port and power supply with a small sub-D 15 connector and micro FIT 4 connector, SMA antenna interface, slide-in SIM storage.
The above embodiment describes the way of implementation of invention illustratively, those skilled of the art can make some amendments or improvement during application, those amendments or improvement should also fall in the scope of the present invention.

## Claims

1. A kind of digital short-message advertisement-broadcasting device, including:
a power supply (9), used to power the various modules of the digital short-message advertisement-broadcasting device;
a display panel (1);
a power supply of display (7), connected to the said display panel;
a display driver (8), connected to the said display panel and the said power supply of display;
a central-control module (2);
a decoder/driver (6), connected to the said central-control module;
a digital storage device (5), connected to the said decoder/driver, including a program-list file and multiple video files or picture files;
wherein, the said decoder/driver is used to read the said multiple video files or picture files out of the said digital storage device according to the order in the program-list file, decode and send them to the said display driver and display them on the said display panel, under the control of central-control module;
wherein a digital short-message receiver (3) is also included, connected to the said central-control module, used to receive a short message via mobile communication network and send the said short message to the central-control module, the said central-control module modifies the playing order in the program-list file according to the content of short message, and displays the text file on the display panel or stores the picture file contained in the short message into the said digital storage device.

2. The digital short-message advertisement-broadcasting device according to the claim 1, wherein it includes an input device (4) connected to the said digital storage device, which is used to input the program-list file or picture file into the said digital storage device.

3. The digital short-message advertisement-broadcasting device according to the claim 2, wherein the said input device (4) is an USB interface.

4. The digital short-message advertisement-broadcasting device according to the claim 2, wherein the said input device is a CF card reader, a SD card reader or a flash card reader.

5. The digital short-message advertisement-broadcasting device according to the claim 1, wherein the said display panel is a LCD display, a plasma display, a CRT display or any other favorite display.

6. The digital short-message advertisement-broadcasting device according to the claim 1, wherein the said digital short-message receiver is a GSM receiver.

7. The digital short-message advertisement-broadcasting device according to the claim 1, wherein the said digital short-message receiver is a CDMA receiver.

8. The digital short-message advertisement-broadcasting device according to the claim 1, wherein the said digital short-message receiver is a 3G, GSM, Wi-Fi (IEEE 802.11b ) or WiMAX (IEEE802.16) receiver.

9. The digital short-message advertisement-broadcasting device according to the claim 1, wherein the said digital short-message receiver is a GSM terminal called "short-message cat"

10. The digital short-message advertisement-broadcasting device according to the claim 1, wherein the said digital short-message receiver is an IP videophone motherboard.

11. The digital short-message advertisement-broadcasting device according to the claim 1, wherein the said decoder/driver is a DVD decoder/driver.

12. The digital short-message advertisement-broadcasting device according to the claim 1, wherein the said central-control module could connect to a sensor for eye ball counting.
